Europäisches Patentamt

European Patent Office

Office européen des brevets

(11) Veröffentlichungsnummer: **0 268 087**
**A2**

## (12) EUROPÄISCHE PATENTANMELDUNG

(21) Anmeldenummer: **87115204.7**

(22) Anmeldetag: **17.10.87**

(51) Int. Cl.⁴: **G02C 13/00**

(30) Priorität: **15.11.86 DE 3639101**

(43) Veröffentlichungstag der Anmeldung:
**25.05.88 Patentblatt 88/21**

(84) Benannte Vertragsstaaten:
**AT BE CH DE ES FR GB IT LI NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Thomas, Peter**
**Obere Rutenbeckstrasse 55**
**D-5600 Wuppertal 12(DE)**
Erfinder: **Reitz, Hans-Joachim, Dipl.-Design.**
**Gustav-Freytag-Strasse 29a**
**D-5064 Rösrath 2(DE)**
Erfinder: **Schaab, Udo, Dipl.-Ing.**
**Schiefbahner Strasse 38**
**D-4052 Korschenbroich 2(DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1(DE)**

(54) **Vorrichtung zur Pflegebehandlung von Kontaktlinsen.**

(57) Bei einer Vorrichtung zur Pflegebehandlung von Kontaktlinsen mit einem Behälter zur Aufnahme einer Pflegeflüssigkeit und einem in den Behälter einsetzbaren, die Kontaktlinsen aufnehmenden Kontaktlinsenträger und mit Einrichtungen zur Bewegung der Pflegeflüssigkeit soll in ähnlicher Weise wie bei der Vorrichtung gemäß der älteren Patentanmeldung P 36 22 391.3 eine handhabungsfreundliche, beschleunigte sowie qualitativ verbesserte Kontaktlinsenpflege ermöglicht werden, die besonders einfach und kleinbauend ausgebildet und damit preisgünstig herstellbar ist und zudem ein gutes Auflösungsvermögen für in den Behälter für die Pflegeflüssigkeit eingegebene Tabletten, insbesondere sogenannte Zwei-Phasen-Tabletten aufweist.

Dies wird dadurch erreicht, daß die Einrichtungen zur Bewegung der Pflegeflüssigkeit einen auf den Kontaktlinsenträger (8) wirkenden Vibrator (10,11) aufweisen.

FIG.1

## "Vorrichtung zur Pflegebehandlung von Kontaktlinsen"

Die Erfindung betrifft eine Vorrichtung zur Pflegebehandlung von Kontaktlinsen mit einem Behälter zur Aufnahme einer Pflegeflüssigkeit und einem in den Behälter einsetzbaren, die Kontaktlinsen aufnehmenden Kontaktlinsenträger und mit Einrichtungen zur Bewegung der Pflegeflüssigkeit.

Bei bekannten Vorrichtungen dieser Art (DE-OS 34 10 400 und US-PS 3 623 492) wird die Bewegung der Pflegeflüssigkeit durch Drehen des die Kontaktlinsen aufnehmenden Kontaktlinsenträgers bewirkt, wobei das Drehen von Hand mittels eines drehbar gelagerten Deckelteils und eines zwischen diesem und dem Kontaktlinsenträger angeordneten Getriebes erfolgt. Die Bewegung bzw. Verwirbelung des Flüssigkeitsbades ist dabei jedoch relativ gering und dementsprechend auch die Abspülung der Kontaktlinsenoberflächen bzw. die Auflösung von Tabletten oder Pulvern in der Pflegeflüssigkeit. Auch hat sich die manuelle Betätigung in der Praxis als unbefriedigend erwiesen.

Bekannt sind ferner Vorrichtungen zur Ultraschallreinigung von Kontaktlinsen (DE-OS 25 07 335, 29 25 750 und 31 06 519 und EP 031 152). Derartige mit Ultraschall arbeitende Vorrichtungen sind aber aufgrund der komplizierten und aufwendigen Technik für den normalen Verbraucher zu aufwendig und zudem insbesondere unterwegs nicht problemlos anwendbar. Ferner können die Ultraschall-Belastungen auch zu einer Schädigung der Kontaktlinsen führen.

Es ist daher bereits vorgeschlagen worden (P 36 22 391.3), die Bewegung der Pflegeflüssigkeit mittels eines den Kontaktlinsenträger umgebenden zylindrischen Rührers vorzunehmen, wobei in einem mehrteiligen Gehäuse ein Behälter für die Pflegeflüssigkeit, in diesem der Kontaktlinsenträger und der Rührer, so wie in weiteren Teilen des Gehäuses ein Elektromotor, ein Getriebe und eine Batterie angeordnet sind.

Aufgabe der vorliegenden Erfindung ist die Schaffung einer weiteren Vorrichtung, welche in ähnlicher Weise wie die Vorrichtung gemäß der älteren Patentanmeldung P 36 22 391.3 eine handhabungsfreundliche, beschleunigte sowie qualitativ verbesserte Kontaktlinsenpflege ermöglicht, die besonders einfach und kleinbauend ausgebildet und damit preisgünstig herstellbar ist und zudem ein gutes Auflösungsvermögen für in den Behälter für die Pflegeflüssigkeit eingegebene Tabletten, insbesondere sogenannte Zwei-Phasen-Tabletten aufweist.

Bei einer Vorrichtung der eingangs bezeichneten Art wird diese Aufgabe gemäß der Erfindung dadurch gelöst, daß die Einrichtungen zur Bewegung der Pflegeflüssigkeit eine auf den Kontaktlinsenträger wirkende Vibriereinrichtung aufweisen.

Dadurch ergibt sich eine besonders einfache und raumsparende Ausbildung, insbesondere wenn die Vibrationseinrichtung als elektromagnetische Spule ausgebildet ist, deren Anker mit dem Kontaktlinsenträger verbunden ist.

Eine besonders vorteilhafte konstruktive Ausgestaltung ergibt sich dabei, wenn die Elektromagnetspule mit Anker und einer daran befestigten Aufnahme für den Kontaktlinsenträger in einem Gehäuse-Oberteil derart angeordnet ist, daß sich die Aufnahme für den Kontaktlinsenträger durch eine abdichtende Gummimembran abwärts in den Behälter für die Pflegeflüssigkeit erstreckt, der in einem Gehäuse-Unterteil ausgebildet ist.

Dabei empfiehlt es sich, das Gehäuse-Oberteil und Gehäuse-Unterteil lösbar miteinander verbindbar, vorzugsweise mittels Schraubverbindung auszugestalten.

Die Magnetspule und ggf. eine dieser zugeordnete Steuerelektronik können in eine Vergußmasse im Gehäuse-Oberteil eingebettet sein.

Ferner können sich Heizelemente durch die abdichtende Gummimembran in den im Gehäuse-Unterteil ausgebildeten Be hälter erstrecken.

Einer einfachen Handhabung dient es ferner, wenn in die in den Behälter hineinragende Aufnahme der Kontaktlinsenträger mittels einer Bajonettverbindung einsetzbar ist.

Der Kontaktlinsenträger kann mit einer waagerecht durchgehenden Ausnehmung zur Aufnahme einer Pflegetablette ausgebildet sein, beispielsweise einer sogenannten Zwei-Phasen-Pflegetablette.

Dabei empfiehlt es sich, an den Seitenflächen der Ausnehmung kleine Federn vorzusehen, derart, daß diese die sich bei der Auflösung zunehmend verkleinernde Pflegetablette möglichst lange festhalten, um ein Herabfallen und Absetzen größerer Bestandteile der Pflegetablette auf dem Boden des Behälters zu vermeiden.

Zweckmäßig kann der Kontaktlinsenträger beidseitig der Ausnehmung mit Körbchen zur Aufnahme der Kontaktlinsen versehen sein, wobei zwischen Ausnehmung und Körbchen Öffnungen im Kontaktlinsenträger ausgebildet sind, derart, daß die sich auflösenden Bestandteile der in der Ausnehmung angeordneten Pflegetablette möglichst unmittelbar den Oberflächen der Kontaktlinsen zugeführt werden.

Am unteren Ende des Konaktlinsenträgers kann eine kreisförmige Stand-und Handhabungsplatte angeordnet sein, deren Rand zur Verbesserung der Handhabung vorzugsweise konkav ausgebildet werden kann.

Ferner kann das Gehäuse-Unterteil mit einem Füllventil zum Einbringen einer Pflegeflüssigkeit mittels Spraydose und mit einem flüssigkeitsdichten Entlüftungsventil versehen sein.

Zweckmäßig ist ferner, die Standfläche des Gehäuse-Unterteils mit einem rutschfesten Belag, vorzugsweise aus Moosgummi, zu versehen, um einem Wandern des Geräts infolge der beim Gebrauch entstehenden Vibrationen vorzubeugen.

Schließlich empfiehlt es sich, das Gehäuse insgesamt kegelstumpfförmig auszubilden, um eine Standfläche mit möglichst großem Durchmesser zur Verbesserung von Stand- und Verschiebefestigkeit zu erreichen.

Die Erfindung ist nachstehend anhand der Zeichnung beispielsweise näher erläutert. Diese zeigt in:

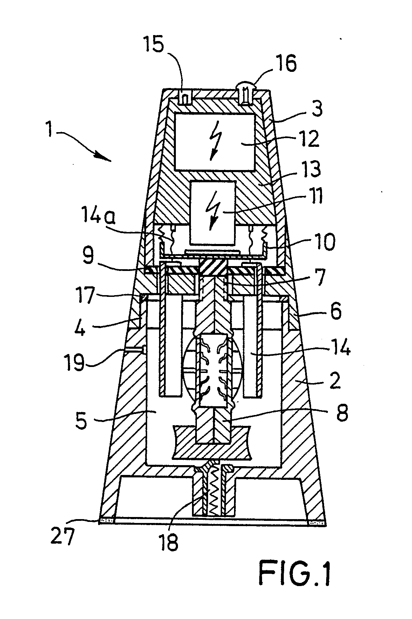

Fig. 1 eine Vorrichtung gemäß der Erfindung im Vertikalschnitt,

Fig. 2 einen Vertikalschnitt durch den Kontaktlinsenträger in vergrößerter Darstellung,

Fig. 3 eine Seitenansicht des Kontaktlinsenträgers gemäß Fig. 2 teilweise im Schnitt wiedergegeben und in

Fig. 4 eine Draufsicht auf den Kontaktlinsenträger gemäß Fig. 3.

Die in der Zeichnung wiedergegebene Vorrichtung weist ein insgesamt mit 1 bezeichnetes, kegelstumpfförmiges Gehäuse auf, mit einem sockelförmigen Unterteil 2 aus durchsichtigem Kunststoff und einem auf dieses mittels einer Schraubverbindung schraubbaren Gehäuse-Oberteil 3. Im Gehäuse-Unterteil 2 ist ein Behälter 5 zur Aufnahme einer Pflegeflüssigkeit ausgebildet, dessen oberer Abschluß von einer Bodenplatte 6 des Oberteils 3 gebildet ist, durch die sich eine Aufnahme 7 für einen Kontaktlinsenträger 8 erstreckt, der in die Aufnahme mittels nicht näher dargestellter Bajonettverbindung einsetzbar ist.

Die Aufnahme 7 erstreckt sich ferner flüssigkeitsdicht durch eine Gummimembran 9 und ist am Anker 10 einer Magnetspule 11 befestigt, welche ihrerseits ebenso wie eine Steuerelektronik 12 in eine Vergußmasse 13 im Gehäuse-Oberteil 3 eingebettet ist. Aus fertigungstechnischen Gründen ist der Boden des Oberteils 6 als gesondertes Teil ausgebildet und nach Einbringen der im Gehäuse-Oberteil unterzubringenden Elemente mit dem übrigen Teil des Gehäuse-Oberteils fest verbunden, vorzugsweise verklebt.

Durch die Gummimembran 9 und den Boden 6 erstrecken sich ferner den Kontaktlinsenträger 8 umgebende Heizelemente 14, die über Leitungen 15 mit der Steuerelektronik 12 verbunden sind. Ferner sind an der Oberseite des Gehäuses noch ein Stromanschluß 15 und eine Betriebskontrollampe 16 und zwischen den Gehäuseteilen 2 und 3 eine Ringdichtung 17 angeordnet. An der Unterseite des Gehäuses ist zum Einbringen einer Pflegeflüssigkeit in den Behälter 5 mittels einer Spraydose ein Füllventil 18 vorgesehen sowie weiter oberhalb ein flüssigkeitsdichtes Entlüftungsventil 19. Schließlich ist die Standfläche des Gehäuses mit einer Moosgummiauflage 27 zur Erhöhung der Rutschfestigkeit des Gehäuses versehen.

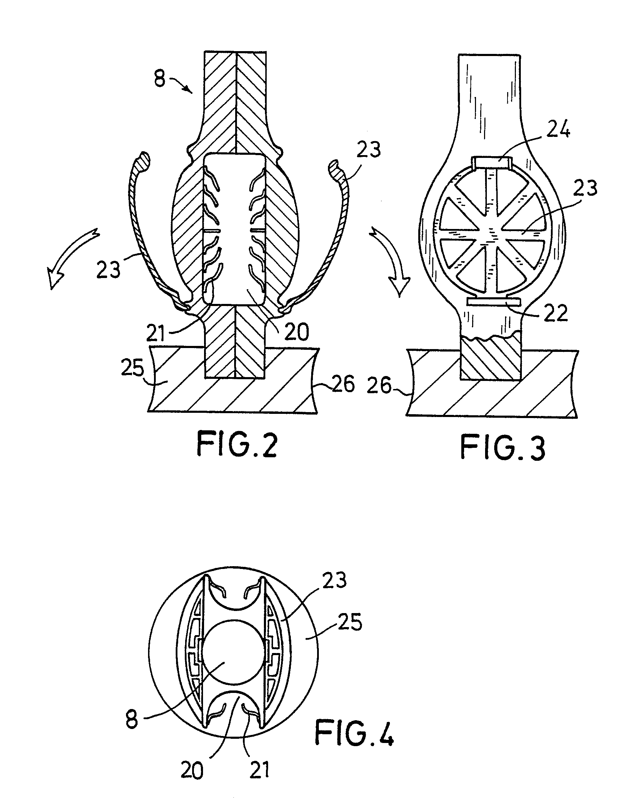

Wie insbesondere Fig. 2 und 4 zeigen, ist in dem aus fertigungstechnischen Gründen zweiteiligen Kontaktlinsenträger eine horizontal durchgehende Ausnehmung 20 ausgebildet, die beidseitig mit kleinen Federn 21 versehen ist, die zum Festhalten einer seitlich in die betreffende Ausnehmung eingeschobenen Pflegetablette dienen. Beidseitig der Ausnehmung 20 sind die üblichen die Kontaktlinsen aufnehmende Körbchen ausgebildet, mit um ein Scharnier 22 schwenkbaren durchbrochenen Verschlußklappen 23, die mit tels Schloß 24 in Schließstellung arretierbar sind. Beidseitig der Ausnehmung 20 sind im Kontaktlinsenträger nicht dargestellte Öffnungen ausgebildet, derart, daß die sich auflösenden Bestandteile der in der Ausnehmung 20 befindenden Tablette möglichst direkt den Kontaktlinsen-Oberflächen zugeführt werden. Am unteren Ende des Kontaktlinsenträgers 8 ist schließlich noch eine runde Stand- und Handhabungsplatte 25 mit konkavem Rand 26 an dem Kontaktlinsenträger 8 befestigt.

Die Wirkungsweise bzw. Handhabung der beschriebenen Vorrichtung ist wie folgt:

Nach dem Abschrauben des Gehäuse-Oberteils 3 und dem Lösen des Kontaktlinsenträgers aus seiner Aufnahme werden die Kontaktlinsen in die Körbchen des Kontaktlinsenträgers 10 eingegeben und in die Ausnehmung 20 wird seitlich eine Pflegetablette eingeschoben. Dann kann eine Pflegeflüssigkeit in das Gehäuseunterteil 2 bis zu einer bestimmten Markierung eingefüllt und das Gehäuseoberteil 3 nach vorherigem Wiedereinsetzen des Kontaktlinsenträgers in seine Aufnahme auf das Unterteil 2 aufgeschraubt und das Gerät in Betrieb genommen werden. Alternativ kann die Füllung des Behälters 5 auch über das Einfüllventil 18 erfolgen, nachdem das Gehäuse-Oberteil 3 bereits aufgeschraubt worden ist.

Die Einschaltdauer des Geräts hängt davon ab, mit welchen Pflegemitteln gearbeitet wird, wobei es grundsätzlich möglich ist, mit zwei getrennten Flüssigkeitsbädern zu arbeiten, d.h. den Behälter zunächst mit einer Reinigungs- und Desinfektionsflüssigkeit zu beschicken und nach Beendigung eines Vibrationsvorganges mit dieser Flüssigkeit den Behälter zu entleeren und mit einer Neutralisationslösung neu zu befüllen und in Vibrationsbetrieb zu nehmen. Man kann aber auch von vornherein alle zur Desinfektion bzw. Reinigung und nachfolgenden Neutralisation erforderlichen Bestandteile, in eine Pflegeflüssigkeit eingeben, wobei durch entsprechende Tabletten-oder Pulverwahl zunächst die Desinfektions-und Reinigungsbestandteile aktiv werden und anschließend die Neutralisationsbestandteile. Die in die Ausnehmung des Kontaktlinsenträgers einschiebbare Pflegetablette kann eine solche sein, welche nur die zur Bildung einer Neutralisationslösung notwendigen Bestandteile aufweist, wobei dann in den Behälter eine Flüssigkeit eingebracht wird, welche die eine Desinfektions-und Reinigungslösung ergebenden Bestandteile bereits wirksam gelöst enthält, wobei die betreffende die Neutralisationslösung bildende Pflegetablette dann so ausgebildet ist, daß sie erst nach einer bestimmten Betriebszeit für das Wirksamwerden der Desinfektions-und Reinigungslösung wirksam bzw. aktiv wird. Die beschriebene Vorrichtung eignet sich allerdings besonders dafür, eine Zwei-Phasen-Pflegetablette in die Ausnehmung des Kontaktlinsenträgers einzuschieben und dann in den Behälter nur eine Kochsalzlösung oder Wasser ggf. destilliertes Wasser einzugeben, wobei die Zwei-Phasen-Pflegetablette derart ausgebildet ist, daß zunächst die eine Desinfektions-und Reinigungslösung ergebenden Anteile in Lösung gehen und nach einer vorbestimmten Zeit die eine Neutralisationslösung ergebenden Anteile.

Natürlich ist die beschriebene Ausführungsform in vielfacher Weise abzuändern bzw. zu ergänzen ohne den Grundgedanken der Erfindung zu verlassen. So könnte auf die Heizelemente je nach den verwendeten Pflegemitteln auch verzichtet werden. Zum anderen könnte die normalerweise eine Zeitsteuerung für die Magnetspule und/oder die Heizung aufweisende Steuerelektronik ganz oder zum Teil entfallen. Die Steuerelektronik kann andererseits die Vibrationsfrequenz der Magnetspule und die Heizleistung in Abhängigkeit vom Fortschreiten des Pflegeprozesses steuern und dgl. mehr.

**Ansprüche**

1. Vorrichtung zur Pflegebehandlung von Kontaktlinsen mit einem Behälter zur Aufnahme einer Pflegeflüssigkeit und einem in den Behälter einsetzbaren, die Kontaktlinsen aufnehmenden Kontaktlinsenträger und mit Einrichtungen zur Bewegung der Pflegeflüssigkeit,
dadurch gekennzeichnet,
daß die Einrichtungen zur Bewegung der Pflegeflüssigkeit einen auf den Kontaktlinsenträger (8) wirkenden Vibrator (10,11) aufweisen.

2. Vorrichtung nach Anspruch 1,
dadurch gekennzeichnet,
daß der Vibrator als elektromagnetische Spule (11) ausgebildet ist, deren Anker (10) mit dem Kontaktlinsenträger (8) verbunden ist.

3. Vorrichtung nach Anspruch 2,
dadurch gekennzeichnet,
daß die Elektromagnetspule (11) mit Anker (10) und einer daran befestigten Aufnahme (7) für den Kontaktlinsenträger (8) in einem Gehäuse-Oberteil (3) derart angeordnet ist,
daß sich die Aufnahme (7) für den Kontaktlinsenträger (8) durch eine abdichtende Gummimembran (9) abwärts in den Behälter (5) für die Pflegeflüssigkeit erstreckt, der in einem Gehäuse-Unterteil (2) ausgebildet ist.

4. Vorrichtung nach Anspruch 3,
dadurch gekennzeichnet,
daß Gehäuse-Oberteil (3) und Gehäuse-Unterteil (2) lösbar miteinander verbindbar sind.

5. Vorrichtung nach Anspruch 4,
dadurch gekennzeichnet,
daß Gehäuse-Oberteil (3) und Gehäuse-Unterteil (2) durch eine Schraubverbindung (4) miteinander verbindbar sind.

6. Vorrichtung nach Anspruch 3 oder einem der folgenden,
dadurch gekennzeichnet,
daß die Magnetspule (11) und ggf. eine dieser zugeordnete Steuerelektronik (12) in eine Vergußmasse (13) im Gehäuse-Oberteil (3) eingebettet sind.

7. Vorrichtung nach Anspruch 3 oder einem der folgenden,
dadurch gekennzeichnet,
daß sich Heizelemente (14) durch die abdichtende Gummimembran (9) in den im Gehäuse-Unterteil (2) ausgebildeten Behälter (5) erstrecken.

8. Vorrichtung nach Anspruch 3 oder einem der folgenden,
dadurch gekennzeichnet,
daß in die in den Behälter (5) hineinragende Aufnahme (7) der Kontaktlinsenträger (8) mittels einer Bajonattverbin dung einsetzbar ist.

9. Vorrichtung nach Anspruch 1 oder einem der folgenden,
dadurch gekennzeichnet,
daß der Kontaktlinsenträger (8) mit einer waagerecht durchgehenden Ausnehmung (20) zur Aufnahme einer Pflegetablette ausgebildet ist.

10. Vorrichtung nach Anspruch 9,
dadurch gekennzeichnet,
daß an den Seitenflächen der Ausnehmung (20) kleine Federn (21) zur möglichst langen Festhaltung einer sich auflösenden Pflegetablette vorgesehen sind.

11. Vorrichtung nach Anspruch 9 oder 10, dadurch gekennzeichnet, daß der Kontaktlinsenträger (8) beidseitig der Ausnehmung (20) mit Körbchen zur Aufnahme der Kontaktlinsen versehen ist, wobei zwischen Ausnehmung und Körbchen Öffnungen im Kontaktlinsenträger ausgebildet sind.

12. Vorrichtung nach Anspruch 8 oder einem der folgenden, dadurch gekennzeichnet, daß am unteren Ende des Kontaktlinsenträgers (8) eine kreisförmige Stand-und Handhabungsplatte (25) angeordnet ist.

13. Vorrichtung nach Anspruch 12, daduch gekennzeichnet, daß der Rand (26) der kreisförmigen Platte (25) konkav ausgebildet ist.

14. Vorrichtung nach Anspruch 3 oder einem der folgenden, dadurch gekennzeichnet, daß das Gehäuse-Unterteil (2) mit einem Füllventil (18) zum Einbringen einer Pflegeflüssigkeit mittels Spraydose vorgesehen ist.

15. Vorrichtung nach Anspruch 3 oder einem der folgenden, dadurch gekennzeichnet, daß im Gehäuse-Unterteil (2) ein flüssigkeitsdichtes Entlüftungsventil (19) vorgesehen ist.

16. Vorrichtung nach Anspruch 3 oder einem der folgenden, dadurch gekennzeichnet, daß auf der Standfläche des Gehäuse-Unterteils (2) ein rutschfester Belag (27) vorgesehen ist.

17. Vorrichtung nach Anspruch 16, dadurch gekennzeichnet, daß der rutschfeste Belag (27) aus Moosgummi gebildet ist.

18. Vorrichtung nach Anspruch 3 oder einem der folgenden, dadurch gekennzeichnet, daß das Gehäuse (1) insgesamt kegelstumpfförmig ausgebildet ist.

FIG.1

FIG.2

FIG.3

FIG.4